# EUROPÄISCHE PATENTSCHRIFT

(11) **EP 0 335 076 B1**
(45) Veröffentlichungstag und Bekanntmachung des Hinweises auf die Patenterteilung: **15.12.1993**
(21) Anmeldenummer: 89101603.2
(22) Anmeldetag: 31.01.1989
(51) Int. Cl.: B60T 13/36, B60T 13/62

(54) **Direkte Druckluftbremse für Schienenfahrzeuge**
Direct acting air brake for railway vehicles
Frein pneumatique à action directe pour véhicules ferroviaires

(30) Priorität: 31.03.1988 DE 3811174
(43) Veröffentlichungstag der Anmeldung: 04.10.1989
(73) Patentinhaber: KNORR-BREMSE AG, 80710 München (DE)
(72) Erfinder: Rychli, Walter, A-2512 Tribuswinkel (AT); Skach, Kuno, A-1190 Wien (AT)

(56) Entgegenhaltungen:
- AT-A- 374 427
- DE-A- 3 506 141
- US-A- 1 989 453
- US-A- 2 121 543
- US-A- 2 136 576

## Beschreibung

Die Erfindung betrifft eine direkte Druckluftbremse für Schienenfahrzeuge, mit einem direkten, zeitabhängig betätigbaren Führerbremsventil zum Steuern eines Vorsteuerbremsdruckes, einem vom Vorsteuerbremsdruck gesteuerten Relaisventil zum Steuern eines Fahrzeugbremszylindern zuzuführenden Bremsdruckes und mit einem den Bremsdruck anzeigenden Druckmesser.

Eine derartige Druckluftbremse ist mit Ausnahme des Druckmessers beispielsweise aus der DE-A-35 06 141 bekannt; die Anordnung des Druckmessers ist notorisch bekannt.

Hinsichtlich der Stufbarkeit von zeitabhängig zu steuernden, direkten Druckluftbremsen der vorstehend genannten Art besteht das Problem, daß durch die Summe von Strömungswiderständen in den der Druckluftbremse zugehörenden Leitungsverbindungen vom Druckübersetzer bis zu den Bremszylindern und auch infolge der Ansprech- und Steuerungsverzögerung des Druckübersetzers sowie weiterer, zwischen diesem und den Bremszylindern eingeordneter, hier nicht erwähnter Ventile der Druckaufbau und auch der Druckabbau in den Bremszylindern gegenüber dem Druckverlauf des Vorsteuerbremsdruckes zeitlich verzögert erfolgt. Beobachtet somit der Fahrzeugführer am im Führerstand angeordneten Druckmesser für den Bremsdruck das Zeitverhalten des am Bremszylinder gemessenen Bremsdruckes, so stellt er nach Beendigen eines zeitabhängigen Brems- oder Lösesteuervorganges ein zeitlich versetztes Nachlaufen, d.h. Über- oder Untersteuern des Bremszylinderdruckes fest. Dieses Nachlaufen bzw. Nachziehen des Bremszylinderdruckes behindert die Bremsbedienung, insbesondere erschwert sie das genaue Einsteuern von für den den jeweiligen Bremsvorgang gewünschten Bremsdruckhöhen. Der Fahrzeugführer müßte den Effekt dieses Nachlaufens bzw. Nachziehens des Bremszylinderdruckes durch vorzeitiges Beenden seiner Betätigung ausgleichen; dies ist nur nach langer Erfahrung und mit begrenzter Genauigkeit möglich.

Der Erfindung liegt die Aufgabe zugrunde, eine Druckluftbremse der eingangs genannten Art mit einfachen Mitteln derart auszugestalten, daß sowohl beim Bremsen wie beim Lösen jeweils gewünschte Bremszylinderdrücke in einfacher Weise und genau einsteuerbar sind, so daß also der vorerwähnte Mangel vermieden wird.

Diese Aufgabe wird nach der Erfindung für eine Druckluftbremse der eingangs genannten Art dadurch gelöst, daß zum Vermeiden einer Über- bzw. Untersteuerung des Bremsdruckes beim Beendigen einer Betätigung des Führerbremsventils (12) an einen den Vorsteuerbremsdruck führenden Raum über eine Drosselvorrichtung ein ansonsten abgeschlossener Luftbehälter angeschlossen ist, wodurch bei Beendigen von Drucksteuervorgängen des Vorsteuerbremsdruckes vermittels des Führerbremsventils der Vorsteuerbremsdruck sich durch Druckausgleich mit dem Luftbehälter auf eine dem zu diesem Zeitpunkt im Bremszylinder herrschenden Bremsdruck zumindest annähernd gleiche Druckhöhe einstellt.

Durch diese Ausbildung der Druckluftbremse wird erreicht, daß bei Beendigen von willkürlichen Drucksteuervorgängen des Vorsteuerbremsdruckes sich dieser rasch an die augenblicklich in den Bremszylindern herrschende Druckhöhe angleicht, wodurch das Relaisventil derart angesteuert wird, daß es diese Druckhöhe im Bremszylinder konstant aufrecht erhält. Es kann somit kein Nachlaufen bzw. Nachziehen oder Auswanderrn des Bremsdruckes von seinem augenblicklichen Wert zum Zeitpunkt des Beendigens der Betätigung des Führerbremsventils erfolgen und es sind somit vorgewählte Bremsdrücke genau einstellbar.

Die Unteransprüche zeigen nach der weiteren Erfindung vorteilhafte Ausgestaltungsmöglichkeiten für eine derart ausgebildete Druckluftbremse auf.

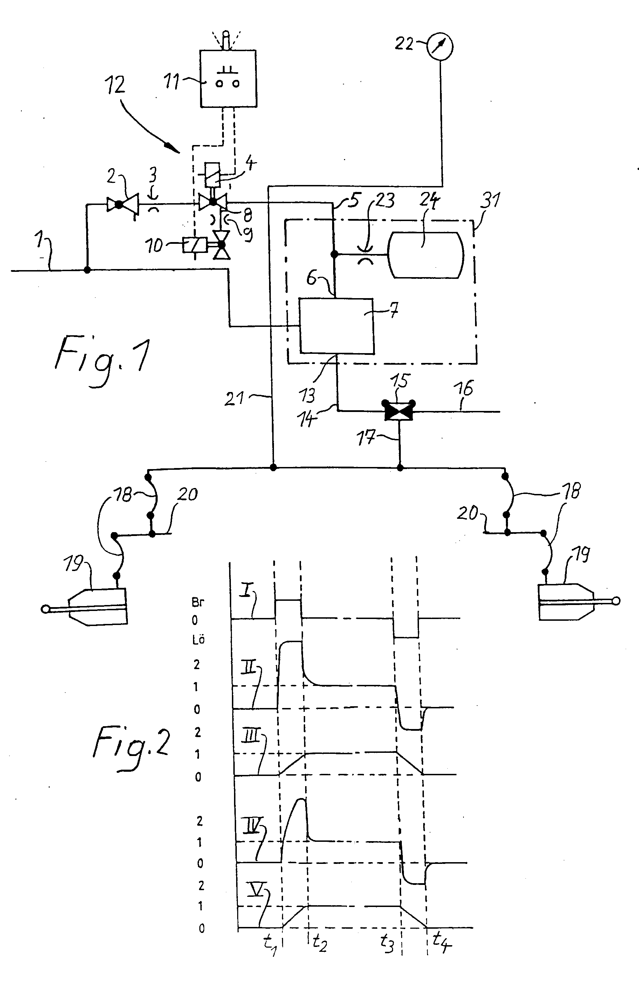

In der Zeichnung sind Ausführungsbeispiele für eine nach der Erfindung ausgebildete Druckluftbremse dargestellt, und zwar zeigt
- Fig. 1: den Gesamtaufbau der Druckluftbremse in schematischer Darstellung,
- Fig. 2.: die Funktionsweise der Druckluftbremse nach Fig. 1 erläuternde Diagramme,
- Fig. 3: eine zu Fig. 1 abgewandelte Einzelheit,
- Fig. 4: ein Schnittbild eines zum Realisieren der Erfindung geeigneten Relaisventils, und
- Fig. 5: eine Einzelheit aus Fig. 4 in vergrößerter und vereinfachter Darstellung
Gemäß Fig. 1 führt eine aus einer nicht gezeigten Druckluftquelle ständig mit Druckluft versorgte Hauptbehälterleitung 1 über ein Druckminderventil 2 und eine Düse 3, welche die maximale Höhe und den Druckanstiegsgradienten eines Vorsteuerbremsdruckes begrenzen, zu einem Magnetventil 4. Das Magnetventil 4 steht andererseits mit einer Steuerleitung 5 in Verbindung, welche den Vorsteuerbremsdruck zum Steuereingang 6 eines (zumeist räumlich entfernt angeordneten) Relaisventils 7 führt. Das Magnetventil 4 verbindet die Steuerleitung 5 je nach seinem Erregungszustand wechselweise mit der Düse 3 oder eine Leitung 8, welche über eine Düse 9 zu einem weiteren Magnetventil 10 führt, dessen anderseitiger Ausgang in die Atmosphäre mündet. Die Düse 9 bestimmt den maximalen Druckabsenkungsgradienten für den Vorsteuerbremsdruck. Die beiden Magnetventile 4 und 10 sind über einen am Führerstand des die direkte Druckluftbremse aufweisenden Schienenfahrzeuges angeordneten Schalter 11 erregbar, derart, daß in einer Ruhestellung die Steuerleitung 5 mit der Leitung 8 verbunden und das Magnetventil 10 geschlossen, in einer Lösestellung zusätzlich das Magnetventil 10 geöffnet und in einer Bremsstellung bei an die Düse 3 angeschlossener Steuerleitung 5 das Magnetventil 10 geschlossen ist. Die beiden Magnetventile 4 und 10 stellen somit zusammen mit dem Schalter 11 ein elektrisch vorgesteuertes, direktes Führerbremsventil 12 dar.

Vom Ausgangsanschluß 13 des aus der Hauptbehälterleitung 1 mit Druckluft versorgten Relaisventils 7 führt eine Rohrleitung 14 zu einem Eingang eines Doppelrückschlagventils 15, dessen anderer Eingang an eine zu einer üblichen, indirekten Bremsdrucksteuerung führenden Rohrleitung 16 angeschlossen ist. Vom Ausgang des Doppelrückschlagventils 15 führt eine Rohrleitung 17 gegebenenfalls über Schlauchverbindungen 18 zu beispielsweise in den Drehgestellen des Schienenfahrzeuges angeordneten Bremszylindern 19; selbstverständlich können in jedem Drehgestell an Stelle des einen, dargestellten Bremszylinders 19 mehrere Bremszylinder vorgesehen sein, sie sind über entsprechende Schlauchverbindungen an die Leitungsabschnitte 20 anzuschließen.

Von der Rohrleitung 17 zweigt vor einer ersten Schlauchverbindung 18 eine Meßleitung 21 ab, welche zu einem im Führerstand angebrachten Druckmesser 22 bzw. Manometer führt.

Insoweit entspricht der Aufbau demjenigen einer allgemein üblichen, direkten Druckluftbremse. Hierbei tritt der Mangel auf, daß, wird der in der Steuerleitung 5 herrschende Vorsteuerbremsdruck vermittels des Schalters 11 durch entsprechende Erregungsvorgänge der Magnetventile 4 und 10 geändert, bei Beendigen dieser bewußt und unter Beobachten des Druckmessers 22 gesteuerten Änderung des Vorsteuerbremsdruckes in den Bremszylindern 19 ein augenblicklicher Bremsdruck herrscht, der sich nachfolgend, bei bereits im Ruhezustand befindlichem Führerbremsventil 12, infolge des Steuerungsverhalten des Relaisventils 7 sowie der Strömungswiderstände in den Rohrleitungen 14 und 17, dem Doppelrückschlagventil 15 sowie den Schlauchverbindungen 18 noch ändert bzw. nachläuft. Soll also vermittels des Führerbremsventils 12 ein bestimmter Bremsdruck in die Bremszylinder 19 eingesteuert werden, so ist die Betätigung des Führerbremsventils 12 bereits zu beenden, bevor der gewünschte Bremsdruck vom Druckmesser 22 angezeigt wird und in den Bremszylindern herrscht; die Zeitspanne, um welche das Führerbremsventil 12 dabei vor Erreichen des gewünschten Bremsdruckes und dessen Anzeige am Druckmesser 22 in seine Ruhestellung zu bringen ist, ist in Abhängigkeit von der Art des jeweiligen Drucksteuervorganges sowie dem Steuerungsverhalten und den Strömungswiderständen der erwähnten Brems- und Leitungsorgane zu wählen. Das genaue Einsteuern eines gewünschten Bremsdruckes in die Bremszylinder 19 ist daher sehr schwierig.

Zum Vermeiden des vorstehend erläuterten Mangels ist an die vorstehend beschriebene, direkte Druckluftbremse gemäß Fig. 1 an die Steuerleitung 5 über eine Düse 23 ein Luftbehälter 24 angeschlossen, welcher ansonsten abgeschlossen ist; die Düse 23 und der Luftbehälter 24 befinden sich dabei nahe des Relaisventils 7. Während durch das Führerbremsventil 12 gesteuerten Änderungen des Vorsteuerbremsdruckes in der Steuerleitung 5 eilt der im Luftbehälter 24 herrschende Druck, bedingt durch die Düse 23, diesen Änderungen zeitlich versetzt nach. Wird die Drucksteuerung vermittels des Führerbremsventils 12 beendet, so gleichen sich die in der Steuerleitung 5 und im Luftbehälter 24 herrschenden Drücke über die Düse 23 relativ rasch zu einem Ausgleichsdruck an, wobei sich der in der Steuerleitung 5 herrschende Vorsteuerbremsdruck entgegen der vorangehenden, gesteuerten Druckänderungsrichtung ändert. Die Düse 23 und der Luftbehälter 24 sind nun derart bemessen, daß die erwähnte Ausgleichsdruckhöhe jeweils wenigstens annähernd demjenigen Druck entspricht, welcher zum Zeitpunkt des Beendigens der Betätigung des Führerbremsventils 12 und dessen Einstellung in die Ruhestellung gerade in den Bremszylindern 19 herrscht und am Druckmesser 22 angezeigt wird. Zum Einsteuern eines bestimmten Bremsdruckes in die Bremszylinder 19 kann also der Fahrzeugführer die Betätigung des Führerbremsventils 12 zu dem Zeitpunkt einstellen und das Führerbremsventil 12 in dessen Ruhestellung bringen, wenn der Druckmesser 12 gerade den gewünschten Bremsdruck anzeigt; die zu diesem Zeitpunkt in der Steuerleitung 5 herrschende Vorsteuerbremsdruckhöhe wird über die Düse 23 vermittels Druckausgleich zum Luftbehälters 24 nachfolgend derart geändert, daß am Steuereingang 6 des Relaisventils 7 sich selbsttätig als Ausgleichsdruck die angezeigte und gewünschte Bremsdruckhöhe einstellt. Das Relaisventil wird so veranlaßt, diese Bremsdruckhöhe unabhängig von Strömungswiderständen und Steuerungsverzögerungen zwangsweise in die Bremszylinder 19 einzuspeisen. Es ist damit ein Einsteuern des jeweils gewünschten Bremsdruckes sehr einfach und genau möglich, die Betätigung des Führerbremsventils 12 muß lediglich bei Anzeige des gewünschten Bremsdruckes am Druckmesser 22 eingestellt werden.

Das Steuerungsverhalten der Druckluftbremse nach Fig. 1 ist in den Diagrammen nach Fig. 2 erläutert. Hierbei stellt Kurve I die Betätigung des Schalters 11 über der Zeit dar, wobei 0 dessen Einstellung in die Ruhestellung, Br dessen Einstellung in die Bremsstellung und Lö dessen Einstellung in die Lösestellung bedeutet. In den übrigen Kurven sind Druckverläufe mit den Druckwerten 0, 1 und 2 über der Zeit dargestellt, wobei die Kurve II den Vorsteuerbremsdruck in der Steuerleitung 5, die Kurve III den Druckverlauf im Luftbehälter 24, die Kurve IV den Druck ab Ausgangsanschluß 13 des Druckübersetzers 7 und die Kurve V den in den Bremszylindern 19 herrschenden Druck darstellen. Es ist ersichtlich, daß beim Einstellen des Schalters 11 und damit des Führerbremsventils 12 in eine Bremsstellung während der Zeitspanne t₁ bis t₂ der Vorsteuerbremsdruck in der Steuerleitung 5 gemäß Kurve II sehr rasch auf eine hohe, durch das Druckminderventil 2 bestimmte Druckhöhe ansteigt, wodurch das Relaisventil 7 veranlaßt wird, an seinem Ausgangsanschluß 13 gemäß Kurve IV mit etwas abgeschwächtem Druckanstiegsgradienten einen ebenfalls hohen Druck auszusteuern. Während der Zeitspanne t₁ bis t₂ kann infolge der Wirkung der Düse 23 der Druck im Luftbehälter 24 nur gemäß Kurve III langsam ansteigen, ebenso wie der Druck im Bremszylinder 19 infolge der Strömungswiderstände in der Rohrleitung 14, dem Doppelrückschlagventil 15, der Rohrleitung 17 sowie den Schlauchverbindungen 18 gemäß Kurve V ebenfalls nur langsam ansteigt. Bei Beendigen der Betätigung des Führerbremsventils 12 zum Zeitpunkt t₂ gemäß Kurve I sinkt der in der bezogen auf das Volumen des Luftbehälters 24 ein sehr kleines Volumen aufweisenden Steuerleitung 5 herrschende Vorsteuerbremsdruck durch Druckausgleich zum Luftbehälter 24 gemäß Kurve II rasch bis auf einen Wert 1 ab, während der im Luftbehälter 24 herrschende Druck gemäß Kurve III nur noch um einen vernachlässigbaren Betrag auf ebenfalls den Wert 1 ansteigt. Das Relaisventil 7 wird hierdurch veranlaßt, gemäß Kurve IV den an seinem Ausgangsanschluß 13 herrschenden Druck rasch ebenfalls bis auf einen Wert 1 abzusenken. Damit steuert das Relaisventil 7 nachfolgend zum Zeitpunkt t₂ in die Rohrleitung 14 gerade diejenige Druckhöhe aus, welche gemäß Kurve V zum Zeitpunkt t₂ auch als Bremsdruck im Bremszylinder 19 erreicht war.

Beim Einsteuern eines Lösens spielen sich entsprechend umgekehrt verlaufende Vorgänge ab, wie es sich sich gemäß der rechten Seite der Fig. 2 im Bereich der Zeitpunkte t₃ und t₄ dargestellt ist.

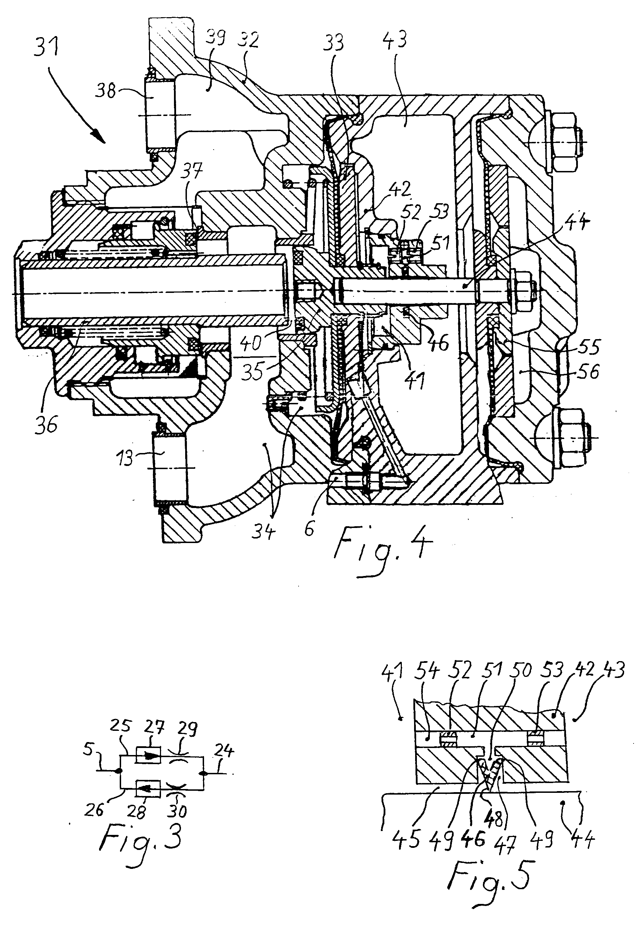

Im Abänderung zum in Fig. 1 dargestellten Ausführungsbeispiel ist es möglich, die dortige Düse 23 gemäß Fig. 3 durch zwei zueinander paralelle Verbindungen 25, 26 zwischen der Steuerleitung 5 und dem Luftbehälter 24 zu ersetzen, wobei in jede Verbindung 25 bzw. 26 ein Rückschlagventil 27 bzw. 28 und in Serie zu diesem eine Düse 29 bzw. 30 eingeordnet ist, wobei die beiden Rückschlagventile 27 und 28 in zueinander entgegengesetzten Strömungsrichtungen öffnen. Es ist hierdurch möglich, dem Luftbehälter 24 für Brems- und Lösevorgänge unterschiedliche Düsen 29 bzw. 30 vorzuschalten, wodurch das Druckausgleichsverhalten zwischen der Steuerleitung 5 und dem Luftbehälter 24 bei Beendigen einer Betätigung des Führerbremsventils 12 noch günstiger an das Strömungsverhalten in den Verbindungen zwischen dem Relaisventil 7 und dem Bremszylindern 19 anpaßbar ist.

In weiterer Abänderung ist es möglich, die Düse 23 durch zwei Drosselrückschlagventile zu ersetzen, welche in Serie zueinander und mit entgegengesetzten Wirkrichtungen in die Verbindung des Luftbehälters 24 zur Steuerleitung 5 eingeordnet sind; mit dieser Anordnung ist eine ähnliche Anpassung wie zur Fig. 3 beschrieben möglich.

Die Fig. 4 zeigt ein besonders vorteilhaftes Relaisventil 31, in welches der Luftbehälter sowie eine zur vorerwähnten Serienschaltung zweier Drosselrückschlagventile umgewandelte Düse integriert sind; das Relaisventil 31 entspricht also im wesentlichen den in Fig. 1 mit einer strichpunktierten Linie umrandeten, ebenfalls mit 31 bezeichneten Bereich.

Das Relaisventil 31 gemäß Fig. 4 weist in einem Gehäuse 32 einen Kolben 33 auf, der einerseits über den Steuereingang 6 mit dem Vorsteuerbremsdruck und andererseits vom in einer Kammer 34 herrschenden Druck am Ausgangsanschluß 13 beaufschlagt ist. Der Kolben 33 trägt eine Stößel 35, der seitens der Kammer 34 zusammen mit einem Ventilrohr 36 ein Einlaßventil 37 aus einer über einen Rohranschluß 38 an die Hauptbehälterleitung 1 angeschlossenen Kammer 39 in die Kammer 34 sowie ein Auslaßventil 40 aus der Kammer 34 durch das Ventilrohr 36 zur Atmosphäre bildet. Andererseits schließt an die mit dem Vorsteuerbremsdruck gefüllte Beaufschlagungskammer 41 für den Kolben 33 eine durch eine Gehäusewand 42 abgetrennte Kammer 43 beachtlichen Volumens an. Ein mit dem Stößel 35 verbundener Stößel 44 durchragt unter Bildung eines Ringspaltes 45 eine Bohrung der Gehäusewand 42 achsial verschieblich, wie es in vergrößertem Maßstab in Fig. 5 dargestellt ist. Der Ringspalt 45 ist von einem Radialnutring 46 abgedichtet, der in eine Innenringnut 47 der Gehäusewand 42 eingesetzt ist und mit seiner Dichtkante 48 am Stößel 44 anliegt. Die Dichtlippen 49 des Radialnutringes 46 liegen rückschlagventilartig an den radialen Seitenwandungen der Innenringnut 47 an. Der zwischen den beiden Dichtlippen 49 befindliche Raum 50 der Innenringnut 47 steht mit einen Zwischenraum 51 in Verbindung, der sich innerhalb der Gehäusewand 42 befindet. Der Zwischenraum 51 steht über eine Düse 52 mit der Beaufschlagungskammer 41 und eine weitere Düse 53 mit der Kammer 43 in Verbindung. Die beiden Düsen 52 und 53 sind zueinander gleichachsig in eine die Gehäusewand 42 durchsetzende Bohrung 54 eingesetzt, der Zwischenraum 51 wird von einem Teil der Bohrung 54 gebildet. Es ist ersichtlich, daß die beiden Dichtlippen 49 in Verbindung mit den Düsen 52 und 53 wie zwei in entgegengesetzer Wirkrichtung zwischen die Beaufschlagungskammer 41 und die mit ihrem Volumen einen Luftbehälter darstellende Kammer 43 eingeordnete Drosselrückschlagventile wirken: steigt der Vorsteuerbremsdruck in der Beaufschlagungskammer 41 an, so vermag Luft an der rückschlagventilartig abklappenden, linken Dichtlippe 49 vorbei und von der Düse 53 überwacht in die Kammer 43 einzuströmen, erfolgt dagegen eine Absenkung des in der Beaufschlagungskammer 41 herrschenden Vorsteuerbremsdruckes, so kann Druckluft aus der Kammer 43 an der rechten, rückschlagventilartig abklappenden Dichtlippe 49 vorbei und durch die Düse 52 überwacht zur Beaufschlagungskammer 41 abzuströmen. Das Abklappen der jeweiligen Dichtlippe 49 gibt dabei große Überbrückungsquerschnitte für die jeweils unwirksame Düse 52 bzw. 53 frei.

Der übrige Aufbau und die Funtionsweise des Relaisventils 31 nach Fig. 4 entsprechen dem Üblichen und brauchen daher hier nicht weiter erläutert zu werden. Die Funktionsweise der Dichtlippen 49 in Verbindung mit den Düsen 52 und 53 sowie der Kammer 43 entspricht der erwähnten Anordnung zweier Drosselrückschlagventile und bedarf daher auch keiner weiteren Erläuterung.

Gemäß Fig. 4 ist der Stößel 44 mit einem zweiten Kolben 55 verbunden, welcher die Kammer 43 von einem weiteren Raum 56 abtrennt. Der Kolben 55 weist eine wesentlich kleinere Wirkfläche als der Kolben 33 auf. Der Raum 56 ist über ein nicht dargestelltes, fahrzeugbelastungsabhängig schaltbares Ventil mit der Beaufschlagungskammer 41 verbindbar; es ist erkennbar, daß je nach Beaufschlagungszustand des Raumes 56 mit atmosphären Druck oder dem Vorsteuerbremsdruck das Relaisventil 31 sein Übersetzungsverhältnis von kleiner als 1:1 auf 1:1 ändert. Bei gleichem Vorsteuerbremsdruck sind somit vermittels des Relaisventils 31 fahrzeuglastabhängig unterschiedliche Bremsdrücke in die Bremszylinder 19 einsteuerbar. Anstelle der fahrzeuglastabhängigen Überwachung der Druckbeaufschlagung des Raumes 56 kann auch eine fahrgeschwindigkeitsabhängige Überwachung vorgesehen sein, es ist des weiteren möglich, insbesondere vermittels eines weiteren Kolbens beide Überwachmöglichkeiten in einem Relaisventil zu kombinieren.

Anstelle des den Schalter 11 und die Magnetventile 4 und 10 umfassenden Führerbremsventil 12 kann ein beliebig andersartiges, beispielsweise rein pneumatisches Führerbremsventil mit betätigungszeitabhängiger Drucksteuerung vorgesehen sein.

### Bezugszeichenliste

- 1: Hauptbehälterleitung
- 2: Druckminderventil
- 3: Düse
- 4: Magnetventil
- 5: Steuerleitung
- 6: Steuereingang
- 7: Relaisventil
- 8: Leitung
- 9: Düse
- 10: Magnetventil
- 11: Schalter
- 12: Führerbremsventil
- 13: Ausgangsanschluß
- 14: Rohrleitung
- 15: Doppelrückschlagventil
- 16: Rohrleitung
- 17: Rohrleitung
- 18: Schlauchverbindung
- 19: Bremszylinder
- 20: Leitungsabschnitt
- 21: Meßleitung
- 22: Druckmesser
- 23: Düse
- 24: Luftbehälter
- 25: Verbindung
- 26: Verbindung
- 27: Rückschlagventil
- 28: Rückschlagventil
- 29: Düse
- 30: Düse
- 31: Relaisventil
- 32: Gehäuse
- 33: Kolben
- 34: Kammer
- 35: Stößel
- 36: Ventilrohr
- 37: Einlaßventil
- 38: Rohranschluß
- 39: Kammer
- 40: Auslaßventil
- 41: Beaufschlagungskammer
- 42: Gehäusewand
- 43: Kammer
- 44: Stößel
- 45: Ringspalt
- 46: Radialnutring
- 47: Innenringnut
- 48: Dichtkante
- 49: Dichtlippe
- 50: Raum
- 51: Zwischenraum
- 52: Düse
- 53: Düse
- 54: Bohrung
- 55: Kolben
- 56: Raum
- I: Kurve
- II: Kurve
- III: Kurve
- IV: Kurve
- V: Kurve
- t₁: Zeitpunkt
- t₂: Zeitpunkt
- t₃: Zeitpunkt
- t₄: Zeitpunkt

## Patentansprüche

1. Direkte Druckluftbemse für Schienenfahrzeuge, mit einem direkten, zeitabhängig betätigbaren Führerbremsventil (12) zum Steuern eines Vorsteuerbremsdruckes, einem vom Vorsteuerbremsdruck gesteuerten Relaisventil (7,31) zum Steuern eines Fahrzeugbremszylindern (19) zuzuführenden Bremsdruckes und mit einem den Bremsdruck anzeigenden Druckmesser (22), dadurch gekennzeichnet, daß zum Vermeiden einer Über- bzw. Untersteuerung des Bremsdruckes beim Beendigen einer Betätigung des Führerbremsventils (12) an einen den Vorsteuerbremsdruck führenden Raum (Steuerleitung 5, Beaufschlagungskammer 41) über eine Drosselvorrichtung (23;29,30;52,53) ein ansonsten abgeschlossener Luftbehälter (24;43) angeschlossen ist, wodurch bei Beendigen von Drucksteuervorgängen des Vorsteuerbremsdruckes vermittels des Führerbremsventils (12) der Vorsteuerbremsdruck sich durch Druckausgleich mit dem Luftbehälter (24;43) auf eine dem zu diesem Zeitpunkt im Bremszylinder (19) herrschenden Bremsdruck zumindest annähernd entsprechende Druckhöhe einstellt.

2. Druckluftbremse nach Anspruch 1, wobei das Relaisventil (7) räumlich entfernt vom Führerbremsventil (12) angeordnet ist, dadurch gekennzeichnet, daß der Luftbehälter (24) sich nahe des Relaisventils (7) befindet.

3. Druckluftbremsen nach Anspruch 1 oder 2, dadurch gekennzeichnet, daß der Luftbehälter ein in das Relaisventil (31) integrierter Innenraum (43) ist.

4. Druckluftbremse nach Anspruch 1, 2 oder 3, dadurch gekennzeichnet, daß die Drossel vorrichtung aus zwei zueinander parallelen Verbindungen (25, 26) zwischen dem den Vorsteuerdruck führenden Raum (Steuerleitung 5) und dem Luftbehälter (24) gebildet ist, wobei in jede Verbindung ein Rückschlagventil (27, 28) und in Serie zu diesem eine Düse (29, 30) eingeordnet sind und wobei die beiden Rückschlagventile in entgegengesetzten Strömungsrichtungen öffnen.

5. Druckluftbremse nach Anspruch 1, 2 oder 3, dadurch gekennzeichnet, daß die Drosselvorrichtung aus zwei in entgegengesetzten Strömungsrichtungen öffnenden, zueinander in Serie geschalteten Drosselrückschlagventilen besteht.

6. Druckluftbremse nach Anspruch 5, dadurch gekennzeichnet, daß die beiden Drosselrückschlagventile gebildet sind aus zwei in Serie zueinander in eine Verbindung vom den Vorsteuerbremsdruck führenden Raum (41) zum Luftbehälter (43) eingeordneten Düsen (52, 53), wobei ein zwischen den beiden Düsen befindlicher Zwischenraum (51) über je eines von zwei in entgegengesetzten Strömungsrichtungen öffnenden Rückschlagventilen (49) mit dem Raum und dem Luftbehälter in Verbindung steht.

7. Druckluftbremse nach Anspruch 6, dadurch gekennzeichnet, daß die beiden Rückschlagventile von den beiden Dichtlippen (49) eines in eine Ringnut (47) eingesetzten Radialnutringes (46) gebildet sind, dessen radiale Dichtkante (48) einen vom Raum (41) zu dem Luftbehälter (43) führenden Ringspalt (45) abdichtet und dessen zwischen den Dichtlippen befindlicher Raum (50) mit dem Zwischenraum (51) in Verbindung steht.

## Claims

1. Direct acting air brake for railway vehicles with a direct driver's brake valve (12) that can be operated as a function of time for control of a precontrol brake pressure, with a relay valve (7, 31) controlled by the precontrol brake pressure for control of a brake pressure to be supplied to the vehicle brake cylinders (19) and with a pressure gauge (22) indicating the brake pressure, wherein for prevention of a too high or too low brake pressure supply at termination of an actuation of the driver's brake valve (12) an air reservoir (24; 43) otherwise closed is connected to the chamber charged with precontrol pressure (control pipe 5, charging chamber 41) via a throttling device (23; 29, 30; 52, 53) through which at termination of pressure control processes of the precontrol pressure, by means of the driver's brake valve (12), the precontrol pressure adjusts, by pressure compensation with the air reservoir (24; 43) to a pressure that corresponds at least approximately to the pressure prevailing at that moment in the brake cylinder (19).

2. Air brake according to claim 1, with the relay valve (7) being arranged at a certain distance from the driver's brake valve (12), wherein the air reservoir (24) is located near the relay valve (7).

3. Air brakes according to claim 1 or 2, wherein the air reservoir is an inner chamber (43) integrated in the relay valve (31).

4. Air brake according to claim 1, 2 or 3, wherein the throttle device is formed by two connections (25, 26) running parallel to each other between the chamber charged with precontrol pressure (control pipe 5) and the air reservoir (24), with one check valve (27, 28) being arranged in each connection and in series with it a choke (29, 30) with the two check valves opening in opposite flow directions.

5. Air brake according to claim 1, 2 or 3, wherein the throttle device consists of two throttle check valves opening in two opposite flow directions and mounted in series one in relation to the other.

6. Air brake according to claim 5, wherein the two throttle check valves consist of two chokes (52, 53) mounted in series in relation to each other in a connection between the chamber (41) charged by precontrol pressure and the air reservoir (43), with an intermediate chamber (51) located between the two chokes communicating with the chamber and the air reservoir via one of the two check valves (49), respectively, that open in opposite flow directions.

7. Air brake according to claim 6, wherein the two check valves are formed by the two sealing lips (49) of a radial lip seal (46) inserted into an annular groove (47), whose radial sealing edge (48) seals an annular gap (45) leading from chamber (41) to the air reservoir (43) and whose chamber (50) located between the sealing lips communicates with the intermediate chamber (51).

## Revendications

1. Frein pneumatique à action directe pour véhicules ferroviaire, avec un robinet de mécanicien (12) à action directe pouvant être actionné en fonction du temps pour commander une pression pilote, avec une valve relais (7, 31) commandée par la pression pilote pour la commande d'une pression de freinage destinée à l'alimentation de cylindres de frein pour véhicules (19) et avec un manomètre (22) indiquant la pression de freinage, caractérisé en ce que pour éviter une pression de freinage trop élevée ou trop basse à la fin d'un actionnement du robinet de mécanicien (12), un réservoir d'air (24; 43) autrement fermé communique avec une chambre chargée de la pression pilote (conduite de commande 5, chambre d'alimentation 41) par un dispositif d'étranglement (23; 29, 30; 52, 53) de sorte qu'à la fin d'un processus de commande de la pression de freinage pilote cette dernière est réglée, au moyen du robinet de mécanicien (12), par égalisation avec le réservoir d'air (24; 43) à une pression au moins approximativement égale à la pression de freinage régnant dans le cylindre de frein (19) en ce moment-là.

2. Frein pneumatique selon revendication 1, où la valve relais (7) est disposée à une certaine distance du robinet de mécanicien (12), caractérisé en ce que le réservoir d'air (24) est situé à proximité de la valve relais (7).

3. Frein pneumatique selon revendication 1 ou 2, caractérisé en ce que le réservoir est une chambre intérieure (43) intégrée dans la valve relais (31).

4. Frein pneumatique selon revendication 1, 2 ou 3, caractérisé en ce que le dispositif d'étranglement est formé par deux raccords (25, 26) disposés en parallèle l'un par rapport à l'autre entre la chambre chargée de la pression pilote (conduite de commande 5) et le réservoir d'air (24), où chaque raccord comporte une soupape de retenue (27, 28) et un orifice calibré (29, 30) monté en série par rapport à cette dernière et où les deux soupapes de retenue s'ouvrent dans des sens d'écoulement opposés.

5. Frein pneumatique selon revendication 1, 2 ou 3, caractérisé en ce que le dispositif d'étranglement consiste en deux soupapes de retenue à étranglement montées en série l'une par rapport à l'autre et s'ouvrant dans deux sens d'écoulement opposés.

6. Frein pneumatique selon revendication 5, caractérisé en ce que les deux soupapes de retenue à étranglement sont formées par deux orifices calibrés (52, 53) montés en série l'un par rapport à l'autre dans un raccord entre la chambre (41) chargée de la pression pilote et le réservoir d'air (43), où une chambre intermédiaire (51) se trouvant entre les deux orifices calibrés est en contact avec la chambre et le réservoir d'air par l'une des deux soupapes de retenue (49) respectivement s'ouvrant dans deux sens d'écoulement opposés.

7. Frein pneumatique selon revendication 6, caractérisé en ce que les deux soupapes de retenue sont formées par les deux lèvres d'étanchéité (49) d'une bague à lèvres (46) insérée dans une rainure annulaire (47) dont le bord d'étanchéité radial (48) étanche une fente annulaire (45) conduisant de la chambre (41) au réservoir d'air (43) et dont la chambre (50) se trouvant entre les lèvres d'étanchéité communique avec la chambre intermédiaire (51).
